# FASCICULE DE BREVET EUROPEEN

(11) **EP 2 478 047 B1**
(45) Date de publication et mention de la délivrance du brevet: **31.07.2013**
(21) Numéro de dépôt: 10751700.5
(22) Date de dépôt: 13.09.2010
(51) Int. Cl.: C08K 5/07, C08L 21/00, B60C 1/00, C08L 61/06, C08L 61/12

(54) **COMPOSITION DE CAOUTCHOUC COMPRENANT UNE RESINE PHENOLIQUE**
KAUTSCHUKZUSAMMENSETZUNG MIT PHENOLHARZ
RUBBER COMPOSITION COMPRISING A PHENOLIC RESIN

(30) Priorité: 14.09.2009 FR 0956283
(43) Date de publication de la demande: 25.07.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: VEYLAND, Anne, F-63200 Marsat (FR); ARAUJO DA SILVA, José Carlos, F-63430 Pont du Chateau (FR); HUNAULT, Vincent, F-63430 Les Martres d'Artieres (FR)
(74) Mandataire: Cohen, Sylvia
(86) Numéro de dépôt international: PCT/EP2010/063404
(87) Numéro de publication internationale: WO 2011/029938

(56) Documents cités:
- US-A- 5 354 788
- US-A- 5 700 587
- US-A1- 2004 116 592
- US-A1- 2004 147 712

## Description

La présente invention est relative aux compositions de caoutchouc destinées notamment à la fabrication de pneumatiques ou de produits semi-finis pour pneumatiques, en particulier des compositions de caoutchouc présentant une rigidité élevée.

Il est connu d'utiliser dans certaines parties des pneumatiques, des compositions de caoutchouc présentant une forte rigidité lors de faibles déformations du pneumatique (cf WO 02/10269). La résistance aux faibles déformations est une des propriétés que doit présenter un pneumatique pour répondre aux sollicitations aux quelles il est soumis.

Cette rigidification peut être obtenue en augmentant le taux de charge renforçante ou en incorporant certaines résines renforçantes dans les compositions de caoutchouc constitutives des parties du pneumatique.

Toutefois, de manière connue, l'augmentation de la rigidité d'une composition de caoutchouc en augmentant le taux de charge peut pénaliser les propriétés d'hystérèse et donc de résistance au roulement des pneumatiques. Or, on cherche toujours à baisser la résistance au roulement des pneumatiques pour diminuer la consommation en carburant et ainsi préserver l'environnement.

Classiquement cette augmentation de la rigidité est obtenue en incorporant des résines renforçantes à base d'un système accepteur/donneur de méthylène. Les termes « accepteur de méthylène » et « donneur de méthylène » sont bien connus de l'homme du métier et largement utilisé pour désigner des composés aptes à réagir ensemble pour générer par condensation une résine renforçante tridimensionnelle qui vient se superposer, s'interpénétrer avec le réseau charge renforçante/élastomère d'une part, avec le réseau élastomère/soufre d'autre part (si l'agent de réticulation est le soufre). A l'accepteur de méthylène précédemment décrit est associé un agent durcisseur, apte à le réticuler ou durcir, encore appelé communément "donneur de méthylène". La réticulation de la résine est alors provoquée lors de la cuisson de la matrice de caoutchouc, par formation de ponts (-CH₂-) entre les carbones en positions ortho et para des noyaux phénoliques de la résine et le donneur de méthylène et créant ainsi un réseau de résine tridimensionnel.

Les donneurs de méthylène classiquement utilisés dans les compositions de caoutchouc pour pneumatiques sont l'hexa-méthylènetétramine (en abrégé HMT), ou l'hexaméthoxyméthylmélamine (en abrégé HMMM ou H3M), ou l'hexaéthoxyméthylmélamine.

Toutefois, la combinaison de résine phénolique classiquement utilisée, accepteur de méthylène avec l'HMT ou l'H3M donneur de méthylène, produit du formaldéhyde au cours de la vulcanisation de la composition de caoutchouc. Or, il est souhaitable de diminuer, voire de supprimer à terme le formaldéhyde des compositions de caoutchouc en raison de l'impact environnemental de ces composés.

De manière inattendue, les Demanderesses ont découvert lors de leurs recherches que les polyaldéhydes peuvent remplacer de façon avantageuse les donneurs de méthylène classiques tout en évitant la production de formaldéhyde. L'utilisation de ces composés polyaldéhydes permet non seulement d'obtenir des compositions de caoutchouc présentant la même rigidité à basse déformation que les compositions de caoutchouc classiques qui comprennent des donneurs de méthylène HMT ou H3M, mais de façon surprenante d'améliorer fortement la résistance à la fatigue des compositions de caoutchouc, donc l'endurance des pneumatiques.

En conséquence, un premier objet de l'invention concerne une composition de caoutchouc à base d'au moins un élastomère diénique, une charge renforçante, un système de réticulation, une résine phénolique, et un polyaldéhyde.

L'invention a également pour objet les pneumatiques comportant une composition de caoutchouc conforme à l'invention.

L'invention a également pour objet les articles en caoutchouc finis ou semi-finis comportant une composition de caoutchouc conforme à l'invention.

Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route, engins agricoles ou de génie civil, avions, autres véhicules de transport ou de manutention.

L'invention ainsi que ses avantages seront aisément compris à la lumière de la description et des exemples de réalisation qui suivent.

### I - Tests

Les compositions de caoutchouc sont caractérisées, avant et après cuisson, comme indiqué ci-après.

### I.1 - Essais de traction

Ces essais permettent de déterminer les contraintes d'élasticité. Sauf indication différente, ils sont effectués conformément à la norme française NF T 46-002 de septembre 1988. On mesure en seconde élongation (i.e. après un cycle d'accommodation au taux d'extension prévu pour la mesure elle-même) le module sécant nominal (ou contraintes apparentes, en MPa) à 10% d'allongement (noté MA10). On mesure également les allongements à la rupture (AR en %). Toutes ces mesures de traction sont effectuées dans les conditions normales de température (23±2°C) et d'hygrométrie (50±5% d'humidité relative), selon la norme française NF T 40-101 (décembre 1979).

### I.2 - Test de fatigue

La résistance à la fatigue, exprimée en nombre de cycle ou en unité relative (u.r), est mesurée de manière connue sur 12 éprouvettes soumises à des tractions répétées de faible fréquence jusqu'à un allongement de 30%, à 23°C, à l'aide d'un appareil Monsanto (type « MFTR ») jusqu'à rupture de l'éprouvette, selon les normes ASTM D4482-85 et ISO 6943.
Le résultat est exprimé en unité relative (u.r). Une valeur supérieure à celle du témoin, arbitrairement fixée à 100, indique un résultat amélioré c'est-à-dire une meilleure résistance à la fatigue des échantillons de caoutchouc.

### II - Conditions de réalisation de l'invention

La composition de caoutchouc selon l'invention est à base d'au moins :
- un élastomère diénique ;
- une charge renforçante ;
- un système de réticulation ;
- une résine phénolique ;
- un polyaldéhyde.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II.1 - Elastomère diénique

La composition de caoutchouc selon l'invention comprend un élastomère diénique.

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une a-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% est 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités - 1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et - 70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (i.e., pour plus de 50 pce) un SBR, qu'il s'agisse d'un SBR préparé en émulsion ("ESBR") ou un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4. Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II.2 - Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" (*"non-black filler*") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g_{.}

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:
(I) Z - A - Sₓ - A - Z , dans laquelle:
   - x est un entier de 2 à 8 (de préférence de 2 à 5) ;
   - A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
   - Z répond à l'une des formules ci-après: 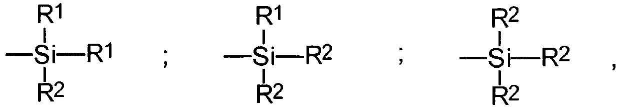 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R² substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)Silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.3 - La résine phénolique

La composition selon l'invention comprend une résine phénolique.

Conviennent en particulier les phénols, nom générique des dérivés hydroxylés, des arènes et les composés équivalents ; une telle définition comprend notamment les monophénols, par exemple le phénol proprement dit ou hydroxybenzène, les bisphénols, les polyphénols (polyhydroxyarènes), les phénols substitués comme des alkylphénols ou aralkylphénols, par exemple bisphénols, diphénylolpropane, diphénylolméthane, naphtols, crésol, t-butylphénol, octylphénol, nonylphénol, xylénol, résorcinol ou produits analogues.

On utilise de préférence des résines phénoliques dites "novolaques", encore appelées précondensats phénol-aldéhyde. Ces résines novolaques (dites aussi résines two-step) sont thermoplastiques et nécessitent l'emploi d'un agent durcisseur pour être réticulées ; elles présentent une plasticité suffisante pour ne pas gêner la mise en oeuvre de la composition de caoutchouc. Après réticulation par l'agent durcisseur elles deviennent des résines "thermodurcies". Les résines novolaques, ont déjà été décrits dans des compositions de caoutchouc, notamment destinées à des pneumatiques ou des bandes de roulement de pneumatiques, pour des applications aussi variées qu'adhésion ou renforcement : on se reportera par exemple aux documents US-A-3 842 111, US-A-3 873 489, US-A-3 978 103, US-A-3 997 581.

Selon un mode préférentiel de l'invention, la quantité de résine phénolique est préférentiellement comprise entre 1 et 20 pce ; en dessous du minimum indiqué, l'effet technique visé est insuffisant, alors qu'au delà du maximum indiqué, on s'expose à des risques de rigidification trop élevée et de pénalisation excessive de l'hystérèse. Pour toutes ces raisons, une quantité comprise entre 2 et 15 pce est plus préférentiellement choisie.

### II.4 - Polyaldéhyde

A la résine précédemment décrite est associé un agent durcisseur, apte à la réticuler ou durcir. Selon l'invention, cet agent durcisseur est un polyaldéhyde. La réticulation de la résine est provoquée lors de la cuisson de la matrice de caoutchouc, par formation de liaisons covalentes entre la résine et les fonctions aldéhydes du durcisseur. Les fonctions aldéhydes des composés polyaldéhydes réagissent avec les carbones en positions ortho et para des noyaux phénoliques créant ainsi un réseau de résine renforçante tridimensionnel qui contribue à rigidifier la composition élastomère. L'absence de donneur de méthylène type HMT ou H3M fait qu'il n'y a plus d'émanation de formaldéhyde lors de la vulcanisation de la composition de caoutchouc.

La composition selon l'invention comporte un polyaldéhyde comportant au moins deux fonctions aldéhydes.

En particulier, le polyaldéhyde est un dialdéhyde, par exemple le propane dialdéhyde, le butane dialdéhyde, le glutaraldéhyde, l'hexane-1,6-dial, le glyoxal, le 1,2-phthaldialdéhyde, le térephthalaldéhyde, le 3,6-diméthoxy-2,7-naphthalènedicarboxaldéhyde, le 1,4-naphthalène dicarboxyaldéhyde, le 1,9-anthracène dicarboxyaldéhyde, le 2,7-naphthalènedicarboxaldéhyde, ou un tri-aldéhydes, par exemple le 1,1,5-pentane tricarboxaldéhyde, le 1,4,7-naphtalène tricarboxaldéhyde, le 1,7,9-anthracène-tricarboxaldéhyde, ou un poly-aldéhydes, par exemple le polyacroléin.

Selon un mode préférentielle de réalisation de l'invention, le polyaldéhyde est le 2-hydroxybenzéne-1,3,5-tricarbaldéhyde.

Selon un mode préférentiel de l'invention, la quantité de durcisseur est préférentiellement comprise entre 1 et 20 pce, et encore plus préférentiellement entre 1 et 15 pce ; en dessous du minimum indiqué, l'effet technique visé s'est révélé insuffisant, alors qu'au delà du maximum indiqué, on s'expose à des risques de pénalisation de la mise en oeuvre à l'état cru des compositions ou de la vulcanisation.

### II.5 - Additifs divers

Les compositions de caoutchouc des bandes de roulement conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, d'autres agents plastifiants que ceux précités, des agents anti-fatigue, des résines renforçantes, un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II.6 - Préparation des compositions de caoutchouc

Les compositions utilisées dans les bandes de roulement de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

La résine phénolique et le polyaldéhyde peuvent être incorporés soit durant la phase non-productive, soit durant la phase productive. De préférence, la résine phénolique est incorporée lors de la phase non productive et le polyaldéhyde lors de la phase productive.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (un élastomère diénique, charge renforçante, une résine phénolique, un polyaldéhyde), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

L'invention concerne les pneumatiques et les produits semi-finis pour pneumatiques précédemment décrits, les articles de caoutchouc tant à l'état cru (c'est à dire, avant cuisson) qu'à l'état cuit (c'est à dire, après réticulation ou vulcanisation).

### II.7 - Pneumatique de l'invention

La composition de caoutchouc selon l'invention peut être utilisée dans différentes parties du pneumatique, notamment dans le sommet, la zone du bourrelet et la zone du flanc.

Selon un mode préférentiel de réalisation de l'invention, la composition de caoutchouc précédemment décrite peut être utilisée dans le pneumatique comme une couche élastomère rigide dans au moins une partie du pneumatique.

Par « couche » élastomère, on entend tout élément tridimensionnel, en composition de caoutchouc (ou « élastomère », les deux étant considérés comme synonymes), de forme et d'épaisseur quelconques, notamment feuille, bande, ou autre élément de section droite quelconque, par exemple rectangulaire ou triangulaire.

Tout d'abord, la couche élastomère peut être utilisée en sous couche disposée dans le sommet du pneumatique, entre d'une part la bande de roulement, i.e., la portion destinée à entrer au contact de la route lors du roulage, et d'autre part la ceinture renforçant ledit sommet. L'épaisseur de cette couche élastomère est de préférence comprise dans un domaine allant de 0,5 à 10 mm, notamment dans un domaine de 1 à 5 mm.

Selon un autre mode préférentiel de réalisation de l'invention, la composition de caoutchouc selon l'invention peut être utilisée pour former une couche élastomère, disposée dans la région de la zone du bourrelet du pneumatique, radialement entre la nappe carcasse, la tringle et le retournement de la nappe carcasse.

Un autre mode préférentiel de réalisation de l'invention peut être l'utilisation de la composition selon l'invention pour former une couche élastomère disposée dans la zone du flanc du pneumatique.

### III - EXEMPLES DE REALISATION DE L'INVENTION

### III.1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique, la charge renforçante et la résine phénolique, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 180°C.

On récupère le mélange ainsi obtenu, on le refroidit puis on incorpore du soufre, un accélérateur type sulfénamide et le polyaldéhyde sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### III.2 - Essais de compositions de caoutchouc

Cet essai illustre des compositions de caoutchouc utilisées dans des zones basses de pneumatiques qui n'engendrent pas la formation de formaldéhyde lors de la cuisson, et qui présentent une rigidité équivalente à basse déformation par rapport à la composition conventionnelle incluant une résine phénolique et du HMT à titre de donneur de méthylène, ainsi qu'une résistance à la fatigue améliorée vis-à-vis de cette composition conventionnelle.

Pour cela, deux compositions de caoutchouc ont été préparées comme indiqué précédemment, une conforme à l'invention (notée ci-après C.2) et une non conforme (composition témoin notée ci-après C.1) (voir tableau 1).

La composition témoin C.1 est une composition conventionnelle pour l'homme du métier, utilisée pour fabriquer des mélanges pour les zones basses des pneumatiques de véhicules de tourisme; elle est à base de caoutchouc naturel.

La composition de l'invention C.2 contient du 2-hydroxybenzéne-1,3,5-tricarbaldéhyde, en remplacement du HMT contenu dans la composition C.1 et est formulée avec le même nombre de fonctions aldéhyde que celui apporté par le durcisseur HMT de la composition C.1.

Leurs formulations (en pce ou parties en poids pour cent parties d'élastomère), leurs propriétés mécaniques ont été résumés dans les tableaux 1 et 2 annexés.

On note dans un premier temps que, la composition C.2 de l'invention présente une rigidité (MA10) quasi équivalente à basse déformation à celle de la composition témoin, ainsi qu'un allongement à la rupture (AR) équivalent.

Toutefois, on constate que la résistance à la fatigue de la composition C.2 selon l'invention est fortement améliorée par rapport à la composition témoin C.1, synonyme d'une amélioration de l'endurance du pneumatique comportant une telle composition

En résumé, les résultats de cet essai démontrent que l'emploi du 2-hydroxybenzéne-1,3,5-tricarbaldéhyde en remplacement du HMT, dans les compositions de caoutchouc de l'invention, permet d'obtenir des compositions de caoutchouc avec des propriétés de rigidité identiques à basse déformation à celle obtenues pour des compositions témoins conventionnelles, tout en améliorant fortement la résistance à la fatigue vis-à-vis de ces mêmes compositions, sans formation de formaldéhyde lors de la cuisson de la composition.

**Tableau 1**

| Constituant | C.1 | C.2 |
|---|---|---|
| NR(1) | 100 | 100 |
| Noir de carbone (2) | 75 | 75 |
| Résine formophénolique (3) | 4 | 4 |
| ZnO (4) | 8 | 8 |
| Acide stéarique (5) | 0.65 | 0.65 |
| 6PPD (6) | 1.4 | 1.4 |
| HMT (7) | 1.6 | - |
| Polyaldéhyde (8) | - | 4,1 |
| CTP (9) | 0.3 | 0.3 |
| Soufre insoluble 20 H (10) | 6.5 | 6.5 |
| TBBS (11) | 0.67 | 0.67 |

| | | |
|---|---|---|
| (1) Caoutchouc Naturel ; (2) Noir de carbone N326 (dénomination selon la norme ASTM D-1765) ; (3) Résine formophénolique novolac (« Peracit 4536K » de la société Perstorp) ; (4) Oxyde de zinc (grade industriel - société Umicore) ; (5) Stéarine (« Pristerene 4931 » de la société Uniqema) ; (6) N-1,3-diméthylbutyl-N-phénylparaphénylènediamine (Santoflex 6-PPD de la société Flexsys) ; (7) Hexaméthylènetétramine (de la société Degussa) ; (8) 2-hydroxybenzéne-1,3,5-tricarbaldéhyde (de la société Maybridge), (9) Cyclohexylthiopthalimide (PVI) ; (10) Soufre insoluble à 80 % ; (11) N-ter-butyl-2-benzothiazyle sulfénamide (de la société Flexsys). | | |

**Tableau 2**

| Composition n° | C.1 | C.2 |
|---|---|---|
| MA10 | 27 | 24.5 |
| AR | 224 | 221 |
| Endurance (fatigue) | 100 | 123 |

## Revendications

1. Composition de caoutchouc à base d'au moins :
- un élastomère diénique ;
- une charge renforçante ;
- un système de réticulation ;
- une résine phénolique ;
- un polyaldéhyde.

2. Composition de caoutchouc selon la revendication 1, dans laquelle l'élastomère est choisi dans le groupe constitué par le caoutchouc naturel, les polyisoprènes de synthèse, les polybutadiènes, les copolymères de butadiène, les copolymères d'isoprène et les mélanges de ces élastomères.

3. Composition de caoutchouc selon l'une quelconque des revendications 1 à 2, dans laquelle le taux de résine phénolique est compris entre 1 et 20 pce.

4. Composition de caoutchouc selon la revendication 3, dans laquelle le taux de résine phénolique est compris entre 2 et 15 pce.

5. Composition de caoutchouc selon l'une quelconque des revendications 1 à 4, dans laquelle le polyaldéhyde comporte au moins 2 fonctions aldéhydes.

6. Composition de caoutchouc selon l'une quelconque des revendications de 1 à 5, dans laquelle le taux de polyaldéhyde est compris entre 1 et 20 pce.

7. Composition de caoutchouc selon la revendication 6, dans laquelle le taux de polyaldéhyde est compris entre 1 et 15 pce.

8. Composition de caoutchouc selon l'une des revendications 1 à 7, dans laquelle le polyaldéhyde est du 2-hydroxybenzéne-1,3,5-tricarbaldéhyde.

9. Composition de caoutchouc selon l'une quelconque des revendications 1 à 8, dans laquelle la charge renforçante comporte du noir de carbone et/ou de la silice.

10. Pneumatique comportant une composition de caoutchouc selon l'une quelconque des revendications 1 à 9.

11. Article de caoutchouc finis ou semi-finis comportant une composition de caoutchouc selon l'une quelconque des revendications 1 à 9.

12. Procédé pour préparer une composition de caoutchouc selon l'une quelconque des revendications 1 à 9, **caractérisé en ce qu'**il comporte les étapes suivantes :
- incorporer à un élastomère diénique, au cours d'une première étape (dite "non-productive"), une charge renforçante, une résine phénolique et un polyaldéhyde, en malaxant thermomécaniquement le tout jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

13. Procédé pour préparer une composition de caoutchouc selon l'une quelconque des revendications 1 à 9, **caractérisé en ce qu'**il comporte les étapes suivantes :
- incorporer à un élastomère diénique, au cours d'une première étape (dite "non-productive"), une charge renforçante, en malaxant thermomécaniquement le tout jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation, une résine phénolique et un polyaldéhyde ;
- malaxer le tout jusqu'à une température maximale inférieure à 110°C.

14. Procédé pour préparer une composition de caoutchouc selon l'une quelconque des revendications 1 à 9, **caractérisé en ce qu'**il comporte les étapes suivantes :
- incorporer à un élastomère diénique, au cours d'une première étape (dite "non-productive"), une charge renforçante, une résine phénolique, en malaxant thermomécaniquement le tout jusqu'à atteindre une température maximale comprise entre 110°C et 190°C;
- refroidir l'ensemble à une température inférieure à 100°C ;
- incorporer ensuite, au cours d'une seconde étape (dite "productive"), un système de réticulation, un polyaldéhyde ;
- malaxer le tout jusqu'à une température maximale inférieure à 110°C.

## Patentansprüche

1. Kautschukzusammensetzung auf der Basis von mindestens:
- einem Dienelastomer;
- einem verstärkenden Füllstoff;
- einem Vernetzungssystem;
- einem Phenolharz;
- einem Polyaldehyd.

2. Kautschukzusammensetzung nach Anspruch 1, wobei das Elastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

3. Kautschukzusammensetzung nach einem der Ansprüche 1 bis 2, wobei der Gehalt an Phenolharz zwischen 1 und 20 phe liegt.

4. Kautschukzusammensetzung nach Anspruch 3, wobei der Gehalt an Phenolharz zwischen 2 und 15 phe liegt.

5. Kautschukzusammensetzung nach einem der Ansprüche 1 bis 4, wobei der Polyaldehyd mindestens 2 Aldehydfunktionen umfasst.

6. Kautschukzusammensetzung nach einem der Ansprüche 1 bis 5, wobei der Gehalt an Polyaldehyd zwischen 1 und 20 phe liegt.

7. Kautschukzusammensetzung nach Anspruch 6, wobei der Gehalt an Polyaldehyd zwischen 1 und 15 phe liegt.

8. Kautschukzusammensetzung nach einem der Ansprüche 1 bis 7, wobei es sich bei dem Polyaldehyd um 2-Hydroxybenzol-1,3,5-tricarbaldehyd handelt.

9. Kautschukzusammensetzung nach einem der Ansprüche 1 bis 8, wobei es sich bei dem verstärkenden Füllstoff um Ruß und/oder Kieselsäure handelt.

10. Luftreifen, umfassend eine Kautschukzusammensetzung nach einem der Ansprüche 1 bis 9.

11. Kautschukfertigartikel oder -halbzeug, umfassend eine Kautschukzusammensetzung nach einem der Ansprüche 1 bis 9.

12. Verfahren zur Herstellung einer Kautschukzusammensetzung nach einem der Ansprüche 1 bis 9, **dadurch gekennzeichnet, dass** man:
- im Lauf eines ersten (als "nichtproduktiv" bezeichneten) Schritts einen verstärkenden Füllstoff, ein Phenolharz und einen Polyaldehyd in ein Dienelastomer einarbeitet, indem man das Ganze thermomechanisch knetet, bis eine Höchsttemperatur zwischen 110°C und 190°C erreicht ist;
- die Masse auf eine Temperatur unter 100°C abkühlt;
- dann im Lauf eines zweiten (als "produktiv" bezeichneten) Schritts ein Vernetzungssystem einarbeitet;
- das Ganze bis zu einer Höchsttemperatur von weniger als 110° C knetet.

13. Verfahren zur Herstellung einer Kautschukzusammensetzung nach einem der Ansprüche 1 bis 9, **dadurch gekennzeichnet, dass** man:
- im Lauf eines ersten (als "nichtproduktiv" bezeichneten) Schritts einen verstärkenden Füllstoff in ein Dienelastomer einarbeitet, indem man das Ganze thermomechanisch knetet, bis eine Höchsttemperatur zwischen 110°C und 190°C erreicht ist;
- die Masse auf eine Temperatur unter 100°C abkühlt;
- dann im Lauf eines zweiten (als "produktiv" bezeichneten) Schritts ein Vernetzungssystem, ein Phenolharz und einen Polyaldehyd einarbeitet;
- das Ganze bis zu einer Höchsttemperatur von weniger als 110° C knetet.

14. Verfahren zur Herstellung einer Kautschukzusammensetzung nach einem der Ansprüche 1 bis 9, **dadurch gekennzeichnet, dass** man:
- im Lauf eines ersten (als "nichtproduktiv" bezeichneten) Schritts einen verstärkenden Füllstoff und ein Phenolharz in ein Dienelastomer einarbeitet, indem man das Ganze thermomechanisch knetet, bis eine Höchsttemperatur zwischen 110°C und 190°C erreicht ist;
- die Masse auf eine Temperatur unter 100°C abkühlt;
- dann im Lauf eines zweiten (als "produktiv" bezeichneten) Schritts ein Vernetzungssystem und einen Polyaldehyd einarbeitet;
- das Ganze bis zu einer Höchsttemperatur von weniger als 110° C knetet.

## Claims

1. Rubber composition based on at least:
- one diene elastomer;
- one reinforcing filler;
- one crosslinking system;
- one phenolic resin;
- one polyaldehyde.

2. Rubber composition according to Claim 1, in which the elastomer is chosen from the group consisting of natural rubber, synthetic polyisoprenes, polybutadienes, butadiene copolymers, isoprene copolymers and the mixtures of these elastomers.

3. Rubber composition according to either one of Claims 1 and 2, in which the level of phenolic resin is between 1 and 20 phr.

4. Rubber composition according to Claim 3, in which the level of phenolic resin is between 2 and 15 phr.

5. Rubber composition according to any one of Claims 1 to 4, in which the polyaldehyde comprises at least two aldehyde functional groups.

6. Rubber composition according to any one of Claims 1 to 5, in which the level of polyaldehyde is between 1 and 20 phr.

7. Rubber composition according to Claim 6, in which the level of polyaldehyde is between 1 and 15 phr.

8. Rubber composition according to one of Claims 1 to 7, in which the polyaldehyde is 2-hydroxybenzene-1,3,5-tricarbaldehyde.

9. Rubber composition according to any one of Claims 1 to 8, in which the reinforcing filler comprises carbon black and/or silica.

10. Tyre, comprising a rubber composition according to any one of Claims 1 to 9.

11. Finished or semifinished rubber article comprising a rubber composition according to any one of Claims 1 to 9.

12. Process for preparing a rubber composition according to any one of Claims 1 to 9, **characterized in that** it comprises the following stages:
- incorporating a reinforcing filler, a phenolic resin and a polyaldehyde in a diene elastomer during a first stage ("nonproductive" stage), everything being kneaded thermomechanically until a maximum temperature of between 110°C and 190°C is reached;
- cooling the combined mixture to a temperature of less than 100°C;
- subsequently incorporating, during a second stage ("productive" stage), a crosslinking system;
- kneading everything up to a maximum temperature of less than 110°C.

13. Process for preparing a rubber composition according to any one of Claims 1 to 9, **characterized in that** it comprises the following stages:
- incorporating a reinforcing filler in a diene elastomer during a first stage ("nonproductive" stage), everything being kneaded thermomechanically until a maximum temperature of between 110°C and 190°C is reached;
- cooling the combined mixture to a temperature of less than 100°C;
- subsequently incorporating, during a second stage ("productive" stage), a crosslinking system, a phenolic resin and a polyaldehyde;
- kneading everything up to a maximum temperature of less than 110°C.

14. Process for preparing a rubber composition according to any one of Claims 1 to 9, **characterized in that** it comprises the following stages:
- incorporating a reinforcing filler and a phenolic resin in a diene elastomer during a first stage ("nonproductive" stage), everything being kneaded thermomechanically until a maximum temperature of between 110°C and 190°C is reached;
- cooling the combined mixture to a temperature of less than 100°C;
- subsequently incorporating, during a second stage ("productive" stage), a crosslinking system and a polyaldehyde;
- kneading everything up to a maximum temperature of less than 110°C.
